# EUROPEAN PATENT SPECIFICATION

(11) **EP 1 486 605 B1**
(45) Date of publication and mention of the grant of the patent: **22.05.2013**
(21) Application number: 04250112.2
(22) Date of filing: 12.01.2004
(51) Int. Cl.: D06F 58/02, D06F 58/20, D06F 25/00

(54) **Washing machine**
Waschmaschine
Machine à laver

(30) Priority: 13.06.2003 KR 2003038388
(43) Date of publication of application: 15.12.2004
(73) Proprietor: Samsung Electronics Co., Ltd., Suwon-si, Gyeonggi-do, 443-742 (KR)
(72) Inventor: Ryu, Doo-Young, Suwon-city, Kyungki-Do (KR)
(74) Representative: Grey, Ian Michael

(56) References cited:
- EP-A- 1 164 217
- DE-A- 2 914 859
- DE-A- 3 134 506
- DE-U- 20 101 641
- GB-A- 2 059 035
- US-A- 4 103 433

## Description

The present invention relates to a washing machine including a drum containing a rotatably mounted tub to receive laundry to be washed and a laundry drying unit for drying washed laundry comprising an air duct having each end in communication with the interior of the drum and a blower fan mounted in the duct to circulate air therethrough and back into the drum during a drying cycle, the drying unit also including a condensing element and a heater in the duct operable to remove moisture and heat the air, respectively, before it passes back into the drum.

In a conventional front loading type of drum washing machine, a rotary tub is mounted in a housing so as to rotate clockwise and counterclockwise about a horizontal axis to agitate laundry placed within the rotary tub to which water for washing the laundry is supplied.

The rotatably tub is disposed within a drum and a door is hingedly mounted to a front of the drum to enable clothes to be placed in, and removed from, the rotary tub.

One type of conventional drum washing machine is provided with a clothes-drying unit to dry wet clothes after washing. A clothes-drying unit includes an air duct installed around an outer surface of the drum in communication with the interior of the drum in which a blower fan and a heater is mounted. A condensing nozzle is also provided in the air duct to remove moisture from high temperature humid air flowing from the water tub after passing through the wet clothes disposed in the drum, thus forming lower temperature dry air.

The drying cycle beings after the wash cycle and spin drying cycle have been completed. When the drying-mode begins, both the blower fan and the heater installed in the air duct are turned on and the low temperature dry air flowing from an area around the condensing nozzle passes through the heater becoming heated and changing into high temperature dry air. The dry air is, thereafter, introduced into the drum and passes through the laundry in the rotary tub, removing moisture therefrom. As the high temperature dry air passes through the laundry, the dry air is humidified, becoming high temperature humid air. This humid air flows to the area around the condensing nozzle, becoming low temperature dry air again. The above-described cycle of the clothes-drying unit is repeated for a predetermined time period until the clothes are dried to a desired level.

A conventional drum washing machine incorporating a clothes-drying unit of the type described above has several drawbacks, as will now be described. When the high temperature humid air flowing from the laundry in the rotary tub passes through the area around the condensing nozzle, the temperature of the air is substantially reduced by cold water which is sprayed from the condensing nozzle to condense the moisture of the humid air. Consequently, the drum washing machine must be provided with the large capacity heater to change the low temperature dry air into high temperature dry air resulting in excessive consumption of electricity. Furthermore, as it is necessary to heat air using the large capacity heater in every cycle, the time required in the drying-mode operation is undesirably increased.

Typically, the drying cycle is performed over a relatively long period of time despite varying in dependence on the quantity of the clothes to be dried. However, as a large capacity heater must be used in a conventional drum washing machine, excessive power is consumed making in uneconomical.

It is known from EP 1 164 217A to provide a washing machine according to the preamble to claim 1, containing a rotatably mounted tub to receive laundry to be washed and a laundry drying unit for drying washed laundry comprising an air duct having each end in communication with the interior of the drum and a blower fan mounted in the duct to circulate air therethrough and back into the drum during a drying cycle, the drying unit also including a condensing element and a heater in the duct operable to remove moisture and heat the air, respectively, before it passes back into the drum.

Further, the use of heat pipes in laundry dryers is known, for instance, from US 4 103 433 A, or GB 2 059 035A, or DE 31 34 506 A1.

A washing machine according to the present invention is characterised by the features recited in the characterising portion of claim 1.

Preferred features of the invention are defined in the dependent claims nos. 2 to 5.

Embodiments of the present invention will now be described, by way of example only, and with reference to the accompanying drawings, in which:

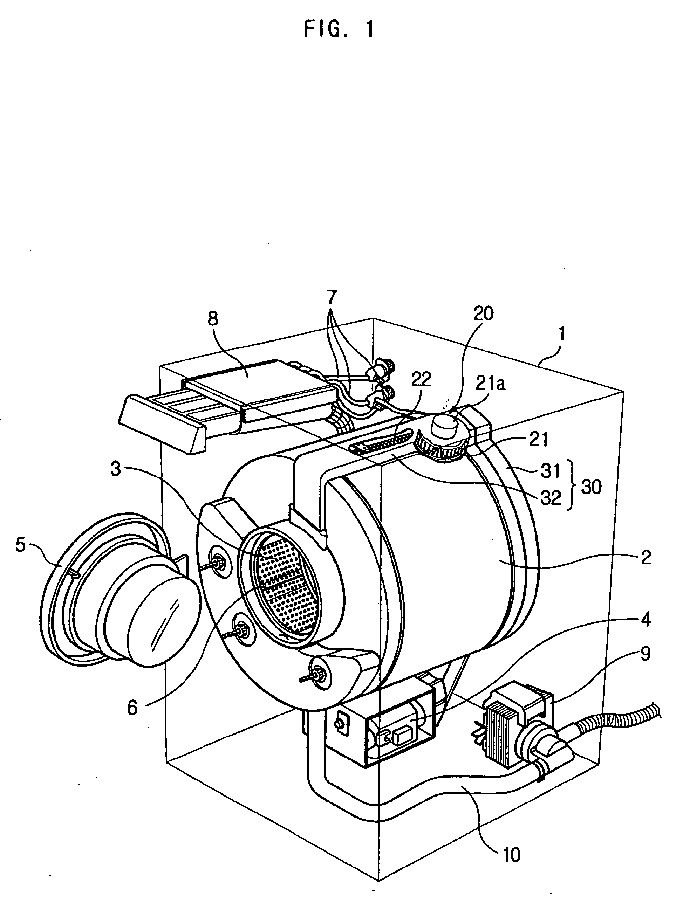

Figure 1 is a perspective view of a drum washing machine provided with a clothes-drying unit, according to an embodiment of the present invention;

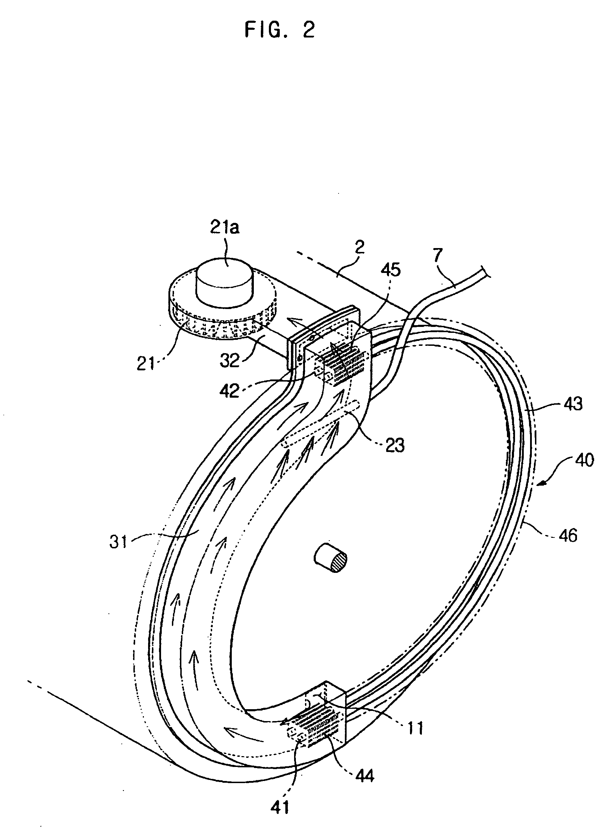

Figure 2 is a perspective view of a part of the drum washing machine of Figure 1 illustrating an arrangement of both an air duct and a plurality of heat pipes provided at a rear end of the drum of the washing machine;
Figure 3 is a sectional view of the drum washing machine of Figure 1 illustrating a drying-mode operation of the drum washing machine, wherein air circulates through the clothes-drying unit and the drum to dry wet clothes.

As illustrated in the drawings, the drum washing machine with the clothes-drying unit of the present invention includes a housing 1. A drum 2 is mounted in the housing 1 to receive water for washing therein. A rotary tub 3 having a perforated sidewall is mounted for rotation about a horizontal axis within the drum 2. The drum washing machine further includes a drive motor 4 to rotate the rotary tub 3 during a washing-mode operation and a spin-drying mode operation wherein clothes in the rotary tub 3 are washed and spin-dried.

Both the drum 2 and the rotary tub 3 have open fronts to allow a user to put laundry into the rotary tub 3 and remove it therefrom. A door 5 is hingedly mounted to a front of the housing 1 to enable the front of both the drum 2 and the rotary tub 3 to be opened or closed. A plurality of lifters 6 are transversely arranged on an inner surface of the perforated sidewall of the rotary tub 3 spaced at regular intervals to repeatedly agitate and lift clothes in the rotary tub 3, along with wash water to a position of a predetermined height, in accordance with rotation of the drum 2, and allow them to drop under gravity thereby washing the clothes.

A water supply hose 7 to supply wash water from an external water source into the drum 2, and a detergent container 8 to add a detergent contained therein to the supplied wash water are disposed within the housing 1. A drain hose 10 with a drain pump 9 is provided at a bottom of the cabinet 1 to facilitate the draining of wash water from the drum 2 to outside when necessary.

A clothes-drying unit 20 is installed on the drum 2 and includes an air duct 30 on the outer surface of the drum 2 in communication with an interior of the drum 2, thus forming a closed air circulation system with the drum 2. The clothes-drying unit 20 further includes a blower fan 21 to circulate the air through the closed air circulation system, and a heater 22 to heat the circulated air to a desired temperature, thereby drying the wet clothes using the heated air. In addition, a condensing nozzle 23 is provided in the air duct 30 to condense moisture laden in the high temperature humid air, flowing from the water tub 2 after passing through clothes in the rotary tub 3, to generate low temperature dry air. The clothes-drying unit 20 further includes a plurality of heat pipes 40 which recover heat from the high temperature humid air flowing from the drum 2, and transfer the recovered heat to an upper end of the first duct part, wherein the low temperature dry air flows from an area around the condensing nozzle 23.

The air duct 30 of the clothes-drying unit 20 has a first duct part 31 and a second duct part 32. The first duct part 31 of the air duct 30 is arranged at a rear end of the drum 2 to reduce the humidity of the air flowing from the clothes contained in the rotary tub 3. The second duct part 32 is arranged at a top of the water tub 2 to heat the air flowing from the first duct part 31, thus changing the humid air into the high temperature dry air, prior to feeding the air into the drum 2.

The first duct part 31 is connected at a lower end thereof to a first connection hole 11 provided at a bottom of the rear end of the drum 2, such that the first duct part 31 communicates with the interior of the drum 2. The first duct part 31 extends from the first connection hole 11 to the top of the rear end of the drum 2 while being curved along a first half part of an edge of the rear end of the drum 2, thus having an arc-shaped appearance.

The second duct part 32 is connected, at the top of a rear end of the drum 2 to an upper end of the first duct part 31. The second duct part 32 axially extends from the top of the rear end of the drum 2 to a front end of the drum 2, and is connected to a second connection hole 12 provided at a front end of the drum 2.

Each of the heat pipes 40 is arranged at the rear end of the drum 2 while being inserted at a lower end 41 thereof into the lower end of the first duct part 31 to a predetermined length, and being inserted at an upper end 42 thereof into the upper end of the first duct part 31 to a predetermined length. An intermediate part 43 of each of the heat pipes 40 between the lower and upper ends 41 and 42 extends along a second half part of the edge of the rear end of the drum 2, thus having an arc-shaped appearance, which is curved in a direction opposite to the curved direction of the first duct part 31.

The lower and upper ends 41,42 of each of the heat pipes 40, respectively arranged in the lower and upper ends of the first duct part 31, are provided with a plurality of first and second heat transfer fins 44,45 which are spaced apart from each other at regular intervals. The first and second heat transfer fins 44,45 enlarge heat transfer surfaces of the lower and upper ends 41,42, thus allowing the ends 41,42 to efficiently recover and transfer heat relative to the air flowing around the ends 41,42 in the first duct part 31. In the embodiment of the present invention, the heat pipes 40 and the heat transfer fins 44,45 are preferably made of a light material having high thermal conductivity, such as aluminium.

The intermediate parts 43 of the heat pipes 40 which are exposed to an outside of the first duct part 31, are covered with a thermal insulation material 46 to prevent heat dissipation therefrom. Due to the thermal insulation material 46, the heat, recovered at the lower ends 41 of the heat pipes 40, is efficiently conducted to the upper ends 42 through the intermediate parts 43, without significant heat loss.

The condensing nozzle 23, connected to the water supply hose 7, is arranged at a position under the upper ends 42 of the heat pipes 40 in the upper end of the first duct part 31. The condensing nozzle 23 sprays cold water in the upper end of the first duct part 31 to form a water curtain covering an entire sectional area of the upper end of the first duct part 31, thus condensing the moisture laden in the humid air flowing upward along the first duct part 31 into droplets which drop due to gravity. The humid air flowing around the condensing nozzle 23 thus becomes low temperature dry air.

When high temperature humid air flowing from the drum 2 passes through the lower end of the first duct part 31, heat is transferred from the high temperature humid air to the lower ends 41 of the heat pipes 40 through the first heat transfer fins 44. That is, the lower ends 41 of the heat pipes 40 arranged in the lower end of the first duct part 31 recover the heat from the high temperature humid air flowing from the drum 2. The temperature of the humid air flowing in the lower end of the first duct part 31 is thus reduced, while the temperature of the lower ends 41 of the heat pipes 40 is increased. The recovered heat is conducted from the lower ends 41 of the heat pipes 40 to the upper ends 42 through the intermediate parts 43. When the low temperature dry air flowing from the area around the condensing nozzle 23 passes around the heater upper ends 42 of the heat pipes 40, heat is efficiently transferred from the heater upper ends 42 to the low temperature dry air through the second heat transfer fins 45, thereby increasing the temperature of the dry air, before the dry air is introduced into the second duct part 32.

Both the blower fan 21 and the heater 22 are installed in the second duct part 32 communicating with the first duct part 31. The blower fan 21 is rotated by a fan motor 21a to circulate air in the closed air circulation system, while the heater 22 heats the circulated air. In the embodiment of the present invention, the heater 22 is a heating coil, which is arranged along an entire width of the second duct part 32, so that the heater 22 dissipates heat to the air flowing around the heater 22 when the heater 22 is turned on.

Therefore, the primarily heated dry air which flows from the upper end of the first duct part 31 is secondarily heated by the heater 22 in the second duct part 32, thus being changed into the high temperature dry air, prior to being introduced into an interior of the rotary tub 3 through the second connection hole 12 provided at the front end of the drum 2.

The drying mode operation of the drum washing machine having the above described construction will be described herein below.

When the clothes contained in the rotary tub 3 are completed washed with the supplied wash water in the wash cycle, a rinse cycle, and a spin-drying cycle, the drying cycle starts in order to dry the clothes. When the drying cycle starts, the rotary tub 3 rotates at a low speed, and, at the same time, the blower fan 21 and the heater 22 of the clothes-drying unit 20 are turned on.

When the blower fan 21 of the clothes-drying unit 20 is turned on, the air passing through the heater 22 in the second duct part 32, is changed into a high temperature dry air, for example, dry air of about 120°C and 50% relative humidity, prior to being introduced into the interior of the rotary tub 3 through the second connection hole 12 provided at the front end of the water tub 2. While high temperature dry air passes through the wet clothes in the rotary tub 3, the air vaporizes the moisture from the wet clothes and is changed into the high temperature humid air, for example, humid air of about 80°C and 100% relative humidity.

The high temperature humid air flows from the rotary tub 3 into the lower end of the first duct part 31 through the perforations of the rotary tub 3 and the first connection hole 11 provided at the rear end of the drum 2. In the lower end of the first duct part 31, the lower ends 41 of the heat pipes 40 absorb heat from the high temperature humid air through the first heat transfer fins 44, thus recovering the heat. The high temperature humid air in the lower end of the first duct part 31 is thus changed into the intermediate temperature humid air, for example, humid air of about 60°C and 100% relative humidity.

The intermediate temperature humid air flows from the lower end to the upper end of the first duct part 31, and comes into contact with the cold water sprayed from the condensing nozzle 23 arranged in the upper end of the first duct part 31. Therefore, moisture laden in the intermediate temperature humid air is condensed into droplets by the cold water, so that the intermediate temperature humid air is changed into the low temperature dry air, for example, dry air of about 40°C and 50% relative humidity.

In such a case, the droplets formed by condensing the moisture of the intermediate temperature humid air flow down along an inner surface of the first duct part 31 along with the cold water sprayed from the condensing nozzle 23, and are discharged into the interior of the drum 2 through the first connection hole 11. The water is, thereafter, drained from the drum 2 along with the wash water during a draining-mode operation of the drum washing machine.

The heat recovered from the high temperature humid air at the lower ends 41 of the heat pipes 40 through the first heat transfer fins 44, is transferred to the upper ends 42 of the heat pipes 40 through the intermediate parts 43 which are covered with the thermal insulation material 46. Therefore, the heat at the second heat transfer fins 45 provided at the upper ends 42 of the heat pipes 40 increases.

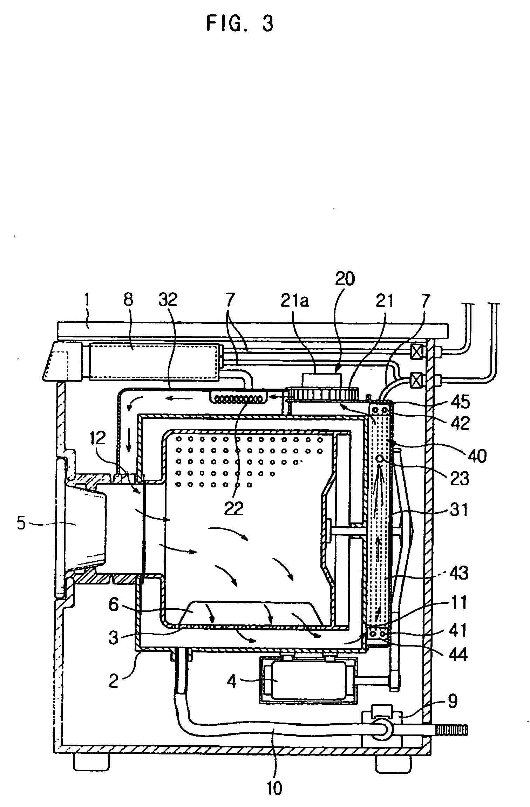

Meanwhile, the low temperature dry air flowing from the area around the condensing nozzle 23 passes through the second heat transfer fins 45 provided on the upper ends 42 of the heat pipes 40 at the position above the condensing nozzle 23, and is combined with the recovered heat at the upper ends 42 of the heat pipes 40 through the second heat transfer fins 45. The low temperature dry air is thus primarily heated and changed into the intermediate temperature dry air, for example, dry air of about 60°C and 50% relative humidity. Thereafter, the intermediate temperature dry air passes through the second duct part 32 having the heater 22, thus being secondarily heated and changed into the high temperature dry air. The above described circulation of the air is shown by the arrows in Figure 3, and is repeated for a predetermined time period, thus quickly drying the clothes contained in the rotary tub 3.

As is apparent from the above description, the present invention provides a drum washing machine, which has a clothes-drying unit with a plurality of heat pipes. The heat pipes recover, during a drying-mode operation of the drum washing machine to dry clothes, heat from high temperature humid air just after the high temperature humid air comes out of a water tub, and combines the recovered heat with low temperature dry air flowing from an area around a condensing nozzle. Therefore, the clothes-drying unit effectively preheats the air just before the air is introduced to a heater, thus saving electricity during the drying-mode operation. In addition, the clothes-drying unit of the drum washing machine quickly increases a temperature of the air, thus saving time during the drying-mode operation.

Although an embodiment of the present invention has been shown and described, it would be appreciated by those skilled in the art that changes may be made in this embodiment without departing from the principles of the invention, the scope of which is defined in the claims.

## Claims

1. A washing machine including a drum (2) containing a rotatably mounted tub (3) to receive laundry to be washed and a laundry drying unit (20) for drying washed laundry comprising an air duct (30) having each end in communication with the interior of the drum (2) and a blower fan (21) mounted in the duct (30) to circulate air therethrough and back into the drum (2) during a drying cycle, the drying unit (20) also including a condensing element (23) and a heater (22) in the duct (30) operable to remove moisture and heat the air, respectively, before it passes back into the drum (2), wherein the air duct (30) comprises a first duct part (31) arranged at a rear end of the tub (3) such that the first duct part (31) communicates with an interior of the tub (3) at a bottom of the rear end of the tub (3) and extends upward from the bottom to a top of the rear end of the tub along an edge of the rear end of the tub (3), and a second duct part (32) extending from the rear end to a front end of the tub (3) such that the second duct part (32) communicates at a rear end of the tub (3) with the first duct part (31), and communicates at a front end of the tub (3) with the interior of the tub (3), **characterised in that** the drying unit (20) comprises a heat pipe (40) having a first end (41) inserted into a first end of the first duct part (31) for recovering heat from the air in the duct (30) before it reaches the condensing element (23) and, a second end (42) inserted into a second end of the first duct part (31) for transferring the recovered heat back to the air after it has passed the condensing element (23), the heat pipe (40) also having a thermally insulated intermediate part (43) which extends outside of the duct (30) between the first end of the first duct part (31) and the second end of the first duct part (31) to transfer heat between said first and second ends (41,42) of the heat pipe (40).

2. A washing machine according to claim 1, wherein at least one end (41,42) of the heat pipe (40) is provided with a plurality of heat transfer fins (44,45) located within the duct (30).

3. A washing machine according to claim 1 or claim 2, wherein the condensing element (23) is installed in the first duct part (31), and both the blower fan (21) and the heater (22) are installed in the second duct part (32).

4. A washing machine according to any preceding claim, wherein the heat pipe (40) extends upward from the bottom to the top of the rear end of the water tub (3) so as to he opposite to the first duct part (31), with the lower first end (41) of the heat pipe (40) being arranged in a lower first end of the first duct part (31), and the upper second end (42) of the heat pipe (40) being arranged in an upper second end of the first duct part (31), so that the heat pipe recovers the heat from the air having the high temperature and the high humidity which flows in the lower first end of the first duct part (31), and transfers the recovered heat to the upper second end of the first duct part (41) and combines the recovered heat with the air having the low temperature and the dry state which flows in the upper second end of the first duct part (31).

5. The drum washing machine according to any of claims 2 to 4, wherein the heat pipe (40) and the heat transfer fins (44,45) are made of aluminium.

## Patentansprüche

1. Waschmaschine, beinhaltend eine Trommel (2), enthaltend einen drehbar montierten Bottich (3) zum Empfangen von Wäsche, die zu waschen ist, und eine Wäschetrocknereinheit (20) zum Trocknen von gewaschener Wäsche, umfassend einen Luftkanal (30) mit jedem Ende in Kommunikation mit dem Inneren der Trommel (2) und einem drückenden Ventilator (21), der in dem Kanal (30) montiert ist, um Luft dadurch und zurück in die Trommel (2) während eines Trocknungszyklus zu zirkulieren, wobei die Trocknereinheit (20) außerdem ein Kondensationselement (23) und eine Heizung (22) in dem Kanal (30) beinhaltet, die betriebsfähig sind, um Feuchtigkeit zu entfernen bzw. die Luft zu erwärmen, bevor sie zurück in die Trommel (2) passiert, wobei der Luftkanal (30) einen ersten Kanalteil (31), der an einem hinteren Ende des Bottichs (3) angeordnet ist, so dass der erste Kanalteil (31) mit einem Inneren des Bottichs (3) an einer Unterseite des hinteren Endes des Bottichs (3) kommuniziert und sich von der Unterseite nach oben zu einer Oberseite des hinteren Endes des Bottichs entlang einer Kante des hinteren Endes des Bottichs (3) erstreckt, und einen zweiten Kanalteil (32), der sich von dem hinteren Ende zu einem vorderen Ende des Bottichs (3) erstreckt, so dass der zweite Kanalteil (32) an einem hinteren Ende des Bottichs (3) mit dem ersten Kanalteil (31) kommuniziert und an einem vorderen Ende des Bottichs (3) mit dem Inneren des Bottichs (3) kommuniziert, umfasst, **dadurch gekennzeichnet, dass** die Trocknereinheit (20) ein Wärmerohr (40) mit einem ersten Ende (41), das in ein erstes Ende des ersten Kanalteils (31) zum Zurückgewinnen von Wärme aus der Luft in dem Kanal (30), bevor sie das Kondensationselement (23) erreicht, eingeführt ist, und ein zweites Ende (42), das in ein zweites Ende des ersten Kanalteils (31) zum Übertragen der zurückgewonnenen Wärme zurück zu der Luft, nachdem sie das Kondensationselement (23) passiert hat, eingeführt ist, umfasst, wobei das Wärmerohr (40) außerdem einen thermisch isolierten Zwischenteil (43) aufweist, der sich außerhalb des Kanals (30) zwischen dem ersten Ende des ersten Kanalteils (31) und dem zweiten Ende des ersten Kanalteils (31) erstreckt, um Wärme zwischen dem ersten und zweiten Ende (41, 42) des Wärmerohrs (40) zu übertragen.

2. Waschmaschine nach Anspruch 1, wobei mindestens ein Ende (41, 42) des Wärmerohrs (40) mit einer Vielzahl von Wärmeübertragungsrippen (44, 45) versehen ist, die sich innerhalb des Kanals (30) befinden.

3. Waschmaschine nach Anspruch 1 oder Anspruch 2, wobei das Kondensationselement (23) in dem ersten Kanalteil (31) installiert ist und sowohl der drückende Ventilator (21) als auch die Heizung (22) in dem zweiten Kanalteil (32) installiert sind.

4. Waschmaschine nach einem der vorstehenden Ansprüche, wobei das Wärmerohr (40) sich von der Unterseite nach oben zu der Oberseite des hinteren Endes des Wasserbottichs (3) erstreckt, um dem ersten Kanalteil (31) gegenüberliegend zu sein, wobei das untere erste Ende (41) des Wärmerohrs (40) in einem unteren ersten Ende des ersten Kanalteils (31) angeordnet ist und das obere zweite Ende (42) des Wärmerohrs (42) in einem oberen zweiten Ende des ersten Kanalteils (31) angeordnet ist, so dass das Wärmerohr die Wärme aus der Luft mit der hohen Temperatur und der hohen Feuchtigkeit, die in dem unteren ersten Ende des ersten Kanalteils (31) strömt, zurückgewinnt und die zurückgewonnene Wärme zu dem oberen zweiten Ende des ersten Kanalteils (41) überträgt und die zurückgewonnene Wärme mit der Luft, die die niedrige Temperatur und den trockenen Zustand aufweist, die in dem oberen zweiten Ende des ersten Kanalteils (31) strömt, kombiniert.

5. Trommelwaschmaschine nach einem der Ansprüche 2 bis 4, wobei das Wärmerohr (40) und die Wärmeübertragungsrippen (44, 45) aus Aluminium hergestellt sind.

## Revendications

1. Machine à laver comprenant un tambour (2) qui contient une cuve (3), montée de manière à pouvoir tourner et destinée à recevoir du linge à laver, et un système sèche-linge (20), destiné à sécher le linge lavé et comprenant un conduit d'air (30), dont chaque extrémité communique avec l'intérieur du tambour (2), et un ventilateur (21) monté dans le conduit (30) pour faire circuler de l'air dans celui-ci et le ramener dans le tambour (2) pendant un cycle de séchage, le système de séchage (20) comprenant également dans le conduit (30) un élément condenseur (23) et un élément chauffant (22) ayant pour fonctions respectives d'enlever l'humidité et de chauffer l'air avant qu'il retourne dans le tambour (2), le conduit d'air (30) comprenant une première partie de conduit (31) disposée à une extrémité arrière de la cuve (3) de telle façon que ladite première partie de conduit (31) communique avec l'intérieur de la cuve (3) au niveau du fond de l'extrémité arrière de la cuve (3) et s'étend vers le haut depuis le fond jusqu'au sommet de l'extrémité arrière de la cuve le long d'un bord de ladite extrémité arrière de la cuve (3), et une deuxième partie de conduit (32) qui s'étend depuis l'extrémité arrière jusqu'à une extrémité avant de la cuve (3) de telle façon que la deuxième partie de conduit (32) communique avec la première partie de conduit (31) au niveau de l'extrémité arrière de la cuve (3) et communique avec l'intérieur de la cuve (3) au niveau de l'extrémité avant de la cuve (3), **caractérisée en ce que** le système de séchage (20) comprend un tuyau chauffant (40) dont une première extrémité (41) est introduite dans une première extrémité de la première partie de conduit (31) afin de récupérer la chaleur de l'air présent dans le conduit (30) avant qu'il atteigne l'élément condenseur (23) et une deuxième extrémité (42) est introduite dans une deuxième extrémité de la première partie de conduit (31) afin de retransmettre la chaleur récupérée à l'air après qu'il a franchi l'élément condenseur (23), le tuyau chauffant (40) ayant également une partie intermédiaire (43) thermiquement isolée qui s'étend à l'extérieur du conduit (30) entre la première extrémité de la première partie de conduit (31) et la deuxième extrémité de la première partie de conduit (31) afin de transférer de la chaleur entre lesdites première et deuxième extrémités (41, 42) du tuyau chauffant (40).

2. Machine à laver selon la revendication 1, dans laquelle au moins une extrémité (41, 42) du tuyau chauffant (40) est pourvue d'une pluralité d'ailettes de transfert thermique (44, 45) situées à l'intérieur du conduit (30).

3. Machine à laver selon la revendication 1 ou la revendication 2, dans laquelle l'élément condenseur (23) est installé dans la première partie de conduit (31) et le ventilateur (21) et l'élément chauffant (22) sont installés l'un et l'autre dans la deuxième partie de conduit (32).

4. Machine à laver selon l'une quelconque des revendications précédentes, dans laquelle le tuyau chauffant (40) s'étend vers le haut depuis le fond jusqu'au sommet de l'extrémité arrière de la cuve à eau (3) se façon à se trouver en face de la première partie de conduit (31), la première extrémité inférieure (41) du tuyau chauffant (40) étant disposée dans une première extrémité inférieure de la première partie de conduit (31) et la deuxième extrémité supérieure (42) du tuyau chauffant (40) étant disposée dans une deuxième extrémité supérieure de la première partie de conduit (31) de telle façon que le tuyau chauffant récupère la chaleur de l'air à température et humidité élevées qui s'écoule dans la première extrémité inférieure de la première partie de conduit (31), transmet la chaleur récupérée à la deuxième extrémité supérieure de la première partie de conduit (41) et combine la chaleur récupérée avec l'air à basse température et à l'état sec qui s'écoule dans la deuxième extrémité supérieure de la première partie de conduit (31).

5. Machine à laver à tambour selon l'une quelconque des revendications 2 à 4, dans laquelle le tuyau chauffant (40) et les ailettes de transfert thermique (44, 45) sont en aluminium.
